# EUROPÄISCHE PATENTSCHRIFT

(11) **EP 4 190 981 B1**
(45) Veröffentlichungstag und Bekanntmachung des Hinweises auf die Patenterteilung: **03.07.2024**
(21) Anmeldenummer: 22206739.9
(22) Anmeldetag: 10.11.2022
(51) Int. Cl.: E03B 7/00, G06Q 50/163, G06Q 10/20, G06Q 10/063, G01M 3/24, G06Q 50/06

(54) **SYSTEM UND VERFAHREN ZUM ERKENNEN EINER LECKAGE EINES WASSERLEITUNGSSYSTEMS**
SYSTEM AND METHOD FOR DETECTING A LEAKAGE OF A WATER LINE SYSTEM
SYSTÈME ET PROCÉDÉ DE DÉTECTION D'UNE FUITE D'UN SYSTÈME DE CONDUITE D'EAU

(30) Priorität: 01.12.2021 DE 102021131635
(43) Veröffentlichungstag der Anmeldung: 07.06.2023
(73) Patentinhaber: 50K UG (haftungsbeschränkt), 50931 Köln (DE)
(72) Erfinder: Franken, Patrick, 50931 Köln (DE)
(74) Vertreter: Patentanwälte Bauer Vorberg Kayser

(56) Entgegenhaltungen:
- WO-A1-2020/247982
- DE-A1-102017 117 652
- US-A1- 2004 128 034
- US-A1- 2018 209 124

## Beschreibung

Die Erfindung betrifft ein System und ein Verfahren zum Erkennen einer Leckage eines Wasserleitungssystems, insbesondere eines Wasserleitungssystems in einem Gebäude, wobei mehrere Verbraucher aus dem Wasserleitungssystem mit Wasser versorgbar sind und wobei jeder der mehreren Verbraucher bei Bezug von Wasser aus dem Wasserleitungssystem - aktiver Verbraucher - Schall in das Wasserleitungssystem aussendet.

Leckagen in Wasserleitungssystemen verursachen jährlich erhebliche Schäden. Im Jahr 2019 entstanden durch Leckagen alleine in Deutschland mehr als 3.000 Wasserschäden pro Tag mit einer durchschnittlichen Schadenshöhe von über 2.800 €, wobei der Schaden umso höher ausfällt, je mehr Wasser austritt und je länger ausgetretenes Wasser auf das Gebäude, das Inventar oder sonstige mit Wasser in Kontakt kommende Dinge einwirken kann. Die einzelnen Schäden summieren sich pro Jahr zu erheblichen Beträgen. Selbst Mikroleckagen, aus denen lediglich geringe Wassermengen austreten, beispielsweise 10 Milliliter pro Minute, können zu kostspieligen Reparaturmaßnahmen führen, da betroffene Wandabschnitte durch austretendes Wasser anhaltend feucht bleiben und es zu erheblicher Schimmelbildung und Substanzschädigung kommen kann. Daher ist ein Bedarf vorhanden, Leckagen verschiedenster Ausmaße erkennen und frühzeitig darauf reagieren zu können.

Aus der Praxis sind verschiedene Ansätze bekannt, die diesen Bedarf adressieren. Ein Ansatz nutzt smarte Durchlaufventile, die in eine Wasserleitung angeflanscht werden, beispielsweise direkt nach einem Wasserzähler. Diese Durchlaufventile überwachen den individuellen Wasserverbrauch. Bei Überschreiten üblicher Verbrauchswerte wird das Leitungssystem abgesperrt und eine Warnmeldung abgesetzt. Dieser Ansatz generiert zwar einen hohen Nutzen, aber gleichzeitig auch hohe Kosten. Ferner ist die Installation aufwändig, da das Wasserleitungssystem für deren Installation abgeschaltet werden muss und die Installation ausschließlich durch Fachpersonen durchgeführt werden kann.

Ein anderer Ansatz basiert auf dem "Smart Home"-Prinzip. Es werden mehrere Sensoren und Aktoren untereinander vernetzt. Die Sensoren erfassen Feuchtigkeit an verschiedensten Stellen innerhalb eines Gebäudes, wobei sich relativ beliebig Sensoren in das System integrieren und ergänzen lassen. Wenn erhöhte Feuchtigkeitswerte festgestellt werden, kann die Wasserzufuhr durch einen Aktor abgeschaltet und eine Warnmeldung abgesetzt werden. Damit können derartige Systeme sehr flexibel auf verschiedenste Installationsszenarien angepasst und ein hoher Nutzen generiert werden. Allerdings reagieren derzeit am Markt verfügbare Sensoren lediglich auf Kontakt mit Wasser. Dies bedeutet, dass erhebliche Mengen an Wasser austreten und bereits eine Wasserpfütze entstanden sein muss, wenn ein Sensor auf eine Leckage reagiert. Schäden durch Mikroleckagen bleiben unentdeckt. Zudem erzeugen die Vielzahl von Sensoren und Aktoren erhebliche Kosten.

Bei einem weiteren Ansatz wird der Durchfluss durch eine Zufuhrleitung eines Wasserleitungssystems überwacht. Entsprechende Lösungen sind beispielsweise von der Smart Wins Technologies GmbH, Berlin, Deutschland oder den HomeServe Labs, Walsall, England beschrieben worden. Dabei wird eine Ist-Durchflussmenge durch eine Messeinheit nicht-invasiv gemessen und in einer Cloud basierend auf künstlicher Intelligenz (KI) ausgewertet werden. Dadurch sollen Rohrbrüche und Mikroleckagen ebenso wie tropfende Wasserhähne erkennbar sein. Diese Ansätze benötigen jedoch eine hohe Bandbreite in die Cloud und/oder relativ viel Rechenressourcen in der Messeinheit, um die KI-basierten Ansätze implementieren zu können.

US 2018/209124 A1 offenbart ein System zur Diagnose von Wasserleckagen. Dabei wird der Gesamtwasserfluss in ein Versorgungsnetz, das durch Verbraucher verbrauchte Wasser sowie der Wasserverbrauch an jedem Knoten des Versorgungsnetzes erfasst. Basierend auf dem Gesamtwasserfluss, dem Verbrauch an jedem Knoten und Schätzparametern wird das Vorhandensein und der Ort einer Leckage ermittelt.

Bezüglich des weiteren Stands der Technik sei auf die US 2004/128034 A1, die WO 2020/247982 A1 und die DE 10 2017 117 652 A1 verwiesen.

Der Erfindung liegt die Aufgabe zugrunde, ein System und ein Verfahren der eingangs genannten Art bereitzustellen, mit denen eine Leckage eines Wasserleitungssystems zuverlässig, kostengünstig und mit geringem Aufwand erkannt werden kann. Dabei ist eine nicht-invasive Installation wünschenswert, sodass auch ein Endkunde das System in Betrieb nehmen kann.

Diese Aufgabe wird durch ein System und ein Verfahren mit den Merkmalen der nebengeordneten Ansprüche gelöst.

Weitere vorteilhafte Ausgestaltungen offenbaren die jeweiligen Unteransprüche sowie die nachfolgende Beschreibung.

Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner angemerkt, dass eine hierin verwendete, zwischen zwei Merkmalen stehende und diese miteinander verknüpfende Konjunktion "und/oder" stets so auszulegen ist, dass in einer ersten Ausgestaltung des beschriebenen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Es ist erkannt worden, dass für ein zuverlässiges Erkennen einer Leckage keine kostspieligen Sensor-Aktor-Netzwerke aufgespannt werden müssen. Vielmehr ist es ausreichend, an einer Zufuhrleitung eines Wasserleitungssystem verschiedene Informationen zu gewinnen und in bestimmter Weise miteinander zu kombinieren. Denn jeder Verbraucher, der durch das Wasserleitungssystem mit Wasser versorgt wird, erzeugt beim Bezug von Wasser Schall und gibt diesen an das Wasserleitungssystem ab. Da Wasser ein guter Schallleiter ist, gelangen die Schallwellen auch zu der Zufuhrleitung des Wasserleitungssystems. Metallische Rohre in dem Wasserleitungssystem begünstigen die Schallleitung noch weiter. Durch Messen und Auswerten des Schalls kann damit festgestellt werden, ob ein Verbraucher und - bei ausreichender Tiefe der Analyse - welcher konkrete Verbraucher aktiv ist. Mit Kenntnis aktiver Verbraucher lässt sich eine erwartete Durchflussmenge abschätzen. Wenn zusätzlich eine Durchflussmenge durch die Zufuhrleitung in das Wasserleitungssystem gemessen wird, kann zuverlässig eine Abweichung dieser Ist-Durchflussmenge von der geschätzten Durchflussmenge ermittelt werden. Daraus kann wiederum auf eine mögliche Leckage geschlossen werden. Dabei kann es sich anbieten, Kenntnisse aus dem bisherigen Betrieb des Systems einfließen zu lassen, wodurch das System - zumindest in gewissem Ausmaß - selbstlernend ausgebildet ist. Hierbei können auch maschinelles Lernen und neuronale Netzwerke zum Einsatz kommen.

Ein System gemäß der vorliegenden Offenbarung, das diesen Ansatz verwirklicht, umfasst eine Durchflussmesseinheit, eine Schallmesseinheit, eine Schätzeinheit und eine Bewertungseinheit. Die Durchflussmesseinheit kann an einer Zufuhrleitung des Wasserleitungssystems angebracht werden. Dort misst sie eine Ist-Durchflussmenge, d.h. die Menge an Wasser, die durch die Zufuhrleitung in das Wasserleitungssystem fließt. Im Betrieb des Systems kann die Schallmesseinheit Schall in dem Wasserleitungssystem messen und daraus Schallmesswerte erzeugen. Die Schallmesswerte werden der Schallauswerteeinheit zugeleitet, die basierend auf den Schallmesswerten aktive Verbraucher erkennen und die derart gewonnenen Informationen über aktive Verbraucher an die Schätzeinheit weiterleiten kann. Die Schätzeinheit ermittelt aus den erkannten aktiven Verbrauchern eine geschätzte Durchflussmenge, d.h. die Menge an Wasser, die durch die erkannten aktiven Verbraucher typischerweise bezogen werden dürften. In diese Schätzung können Erfahrungswerte aus dem bisherigen Betrieb des Systems einfließen. Diese geschätzte Durchflussmenge wird zusammen mit der Ist-Durchflussmenge in die Bewertungseinheit eingegeben, die die beiden Durchflussmengen miteinander vergleicht. Ein Vergleichsergebnis liefert Erkenntnisse, ob eine Leckage vorliegen könnte. Durch Kombination von Schall und Durchflussmenge kann die Zuverlässigkeit und Genauigkeit der Leckageerkennung erheblich gesteigert werden.

Diese Art der Kombination von Sensordaten kann auch als Sensordatenfusion betrachtet werden. Denn es können die Sensordaten von Schallmesseinheit und Durchflussmesseinheit kombiniert werden. Ergänzend können auch zeitliche Verläufe und/oder Auswertungen der Sensordaten in die Sensordatenfusion einfließen.

Ein "Wasserleitungssystem", an dem die vorliegende Offenbarung anwendbar ist, kann relativ beliebig aufgebaut sein. Wichtig ist, dass das Wasserleitungssystem einen oder mehrere Verbraucher mit Wasser versorgen kann und damit Wasser von einer Zufuhrleitung zu den Verbrauchern leitet. Dabei kann die Zufuhrleitung auf der dem Wasserleitungssystem abgewandten Seite beispielsweise an ein öffentliches Wassernetz, eine Quelle, einen Brunnen, eine Zisterne oder eine Wasseraufbereitungsanlage angeschlossen sein, um lediglich einige denkbare Beispiele zu nennen. Wie und auf welchen Wegen Wasser von der Zufuhrleitung zu den Verbrauchern geleitet wird, ist von untergeordneter Bedeutung. Entsprechend ist es auch nicht entscheidend, ob die Leitungen des Wasserleitungssystems in einer Wand, außen an einer Wand, in einer Decke, in Erde und/oder in anderer Weise verlegt sind. Die konkrete Verlegeart der Leitungen oder Leitungsabschnitte ist lediglich dahingehend interessant, da die Verlegeart zumindest in gewissen Grenzen Auswirkungen auf ein mögliches Einkoppeln zusätzlicher Geräusche in das Wasserleitungssystem haben könnte. Auf diese Randbedingungen kann aber meist problemlos reagiert werden.

Auch kann das Wasserleitungssystem prinzipiell unterschiedliche Funktionen erfüllen. In einer Ausgestaltung ist das Wasserleitungssystem Bestandteil eines Versorgungsnetzwerks, das beispielsweise mehrere Gebäude mit Wasser versorgt. In einer anderen Ausgestaltung ist das Wasserleitungssystem in einem Gebäude eingebaut und versorgt verschiedene Verbraucher in dem Gebäude und auf einem Gelände um das Gebäude, beispielsweise einen Garten oder eine Rasenfläche.

Auch ist es von untergeordneter Bedeutung, aus welchem Material die Leitungen und/oder Leitungsabschnitte des Wasserleitungssystems hergestellt sind. Kunststoffrohre können ebenso zum Einsatz kommen wie Rohre aus Metall oder anderen Materialien. Lediglich bei der Zufuhrleitung kann es vorteilhaft sein, wenn diese aus einem Metall, beispielsweise einem Edelstahl, gebildet ist, da diese Ausgestaltung eine Weiterleitung von Schall aus dem Wasserleitungssystem zu der Schallmesseinheit begünstigen kann.

Bei der "Zufuhrleitung" ist es ferner vorteilhaft, wenn über diese Zufuhrleitung das gesamte, durch das Wasserleitungssystem den Verbrauchern zur Verfügung gestellte Wasser eingespeist wird. Sollten mehrere Zufuhrleitungen vorhanden sein, kann es erforderlich sein, an sämtlichen Zufuhrleitungen eine Ist-Durchflussmenge zu messen.

Ein "Verbraucher" kann jede Vorrichtung sein, die mit dem Wasserleitungssystem verbindbar ist und prinzipiell Wasser aus dem Wasserleitungssystem entnehmen kann. Ein Verbraucher kann beispielsweise ein Wasserhahn, eine Duschbrause, eine Toilettenspülung, eine Waschmaschine, ein Geschirrspüler, eine Sprinkleranlage, eine Eiswürfelmaschine oder eine Kaffeemaschine mit Wasseranschluss sein, um lediglich einige mögliche, nicht einschränkend zu verstehende Beispiele zu nennen.

Gleichzeitig kann es sich anbieten, wenn die Anzahl der Verbraucher nicht zu groß ist. Eine große Anzahl von Verbrauchern bedeutet nämlich eine komplexer werdende Auswertung. Denn zum einen wird das Schallgemisch, das bei der Schallmesseinheit ankommt, deutlich komplexer, zum anderen ist die Schätzung der Durchflussmenge zunehmend aufwändig. Vorzugsweise werden in einem Anwendungsszenarium des hier offenbarten Systems durch das Wasserleitungssystem weniger als 200 Verbraucher, besonders bevorzugter Weise maximal 100, ganz besonders bevorzugter Weise maximal 50 Verbraucher, weiter bevorzugter Weise maximal 25 Verbraucher mit Wasser versorgt.

Als "aktiver Verbraucher" im Sinne der vorliegenden Offenbarung wird ein Verbraucher angesehen, der mit dem Wasserleitungssystem verbunden ist und zu einem Bewertungszeitpunkt Wasser aus dem Wasserleitungssystem bezieht. Jeder zu einem ersten Bewertungszeitpunkt aktive Verbraucher kann damit zu einem zweiten Bewertungszeitpunkt kein aktiver Verbraucher mehr sein und umgekehrt. Gleichzeitig können natürlich aktive Verbraucher zu unterschiedlichen Bewertungszeitpunkten aktive Verbraucher bleiben. Die aktiven Verbraucher sind dabei eine Untermenge der mit dem Wasserleitungssystem verbundenen Verbraucher.

Dabei zeigt sich, dass jeder aktive Verbraucher charakteristische Geräusche erzeugt und aussendet, die von der Art des Verbrauchers, dessen Aufbau, dessen Material, dessen Fabrikat, dessen Durchflussmenge, dessen konkreter Installationssituation und/oder sonstigen Rahmenbedingungen abhängen können. Diese charakteristischen Geräusche unterscheiden sich beispielsweise in ihrem Pegel und ihrem Spektrum. Die Frequenzen der Geräusche reichen von wenigen Hertz bis in den Bereich von 20 Kilohertz und darüber. Durch die charakteristischen Geräusche können aus dem Schall, der von den aktiven Verbrauchern bei der Schallmesseinheit ankommt, Rückschlüsse auf die jeweils aktiven Verbraucher gezogen werden.

Dabei genügt eine Auswertung des Summengeräuschs, da dieses Summengeräusch durch eine Mischung charakteristischer Geräusche entsteht. Noch detailliertere Aussagen können durch Zerlegung des Summengeräuschs in einzelne "Schallkomponenten" getroffen werden, da sich dabei die einzelnen charakteristischen Geräusche besser isolieren lassen. Auf diese Weise können verschiedenste aktive Verbraucher erkannt werden, bis hin zu einem tropfenden Wasserhahn oder einer durchlaufenden Toilettenspülung.

Das Auswerten erfasster Schallmesswerte ist Aufgabe der "Schallauswerteeinheit". Diese Aufgabe kann durch die Schallauswerteeinheit auf verschiedene Weise verwirklicht werden. Hierzu kann die Schallauswerteeinheit beispielsweise die Schallmesswerte weiter aufbereiten, beispielsweise durch geeignete Filterung. So kann die Schallauswerteeinheit Störgeräusche aus einem Spektrum der Schallmesswerte isolieren und/oder eliminieren. Derartige Störgeräusche können beispielsweise Geräuschpulse durch Anschlagen einer Leitung des Wasserleitungssystems oder eingekoppelte Vibrationen von anderen Geräten, beispielsweise einem Ventilator, umfassen. Diese Störgeräusche lassen sich gut zu den Zeiten ermitteln, in denen kein Verbraucher aktiv ist.

Mit der Schallauswerteeinheit sollen aktive Verbraucher aus Schallmesswerten erkannt werden. Dabei kann die Schallauswerteeinheit konkret ermitteln, welche der mit dem Wasserleitungssystem verbundenen Verbraucher aktuell aktiv sind. Das Ergebnis der Analyse kann jedoch auch sein, dass derzeit keiner der Verbraucher aktiv ist, wodurch eine ermittelte Ist-Durchflussmenge mit sehr hoher Wahrscheinlichkeit von einer Leckage herrühren dürfte.

Die Schallauswerteeinheit kann auch erste Hinweise auf eine Leckage liefern, da auch Leckagen - je nach Ausmaß und Ausgestaltung - Geräusche erzeugen können. So kann eine Leckage beispielsweise ein konstantes "Zischen" hervorrufen, das in der Intensität eher zu- als abnimmt.

Die "Schätzeinheit" schätzt aus den erkannten aktiven Verbrauchern eine "geschätzte Durchflussmenge", d.h. die Menge an Wasser, die durch die Zufuhrleitung an die aktiven Verbraucher geliefert wird. Wenn keine aktiven Verbraucher erkannt worden sind, ist die geschätzte Durchflussmenge gleich Null. Je nach erkannten aktiven Verbrauchern würde eine von Null verschiedene, geschätzte Durchflussmenge ermittelt. So kann beispielsweise die Analyse des erfassten Schalls ergeben, dass eine Toilettenspülung aktiv ist. Da Toilettenspülungen meist entweder angeschaltet oder ausgeschaltet sind, lässt sich eine Durchflussmenge relativ einfach abschätzen. Bei einem erkannten aktiven Wasserhahn entstehen je nach Durchflussmenge unterschiedliche Verwirbelungen, die wiederum unterschiedliche Geräusche hervorrufen. Daher lassen sich aus dem von einem Wasserhahn ausgesandten Schall Rückschlüsse auf die Durchflussmenge ziehen.

Die "Durchflussmesseinheit" kann unterschiedlich ausgestaltet sein. Wichtig ist, dass die Durchflussmesseinheit eine Ist-Durchflussmenge zuverlässig und mit ausreichender Genauigkeit messen kann. Prinzipiell kann die Durchflussmesseinheit dabei in der Zufuhrleitung angeordnet sein, ähnlich einem Wasserzähler. Wegen der sehr einfachen Installierbarkeit arbeitet die Durchflussmesseinheit in einer Ausgestaltung nicht-invasiv, d.h. die Durchflussmesseinheit wird an der Außenseite der Zufuhrleitung angebracht. Dabei kann es vorteilhaft sein, wenn die Durchflussmesseinheit manschettenartig um die Zufuhrleitung gelegt werden kann.

Auch die "Schallmesseinheit" kann unterschiedlich ausgestaltet sein. Solange die Schallmesseinheit in der Lage ist, Schall aus dem Wasserleitungssystem zu erfassen und daraus Schallmesswerte zu erzeugen, kann diese im Zusammenhang mit der vorliegenden Offenbarung eingesetzt werden. Dabei kann es sich anbieten, wenn die Schallmesseinheit an der Zufuhrleitung und/oder nahe bei der Durchflussmesseinheit angebracht ist. "Nahe" kann in diesem Zusammenhang bedeutet, dass die Schallmesseinheit und die Durchflussmesseinheit nicht weiter als einen Meter, vorzugsweise nicht weiter als einen halben Meter voneinander entfernt angeordnet sind.

Ferner kann es vorteilhaft sein, wenn die Schallmesseinheit in ausreichender Entfernung von anderen Schallquellen (d.h. Schallquellen, die nicht von einem aktiven Verbraucher herrühren) entfernt angeordnet ist. Als derartige andere Schallquelle kann beispielsweise ein Absperrventil oder ein Wasserzähler wirken. Bei einem zu geringen Abstand zu diesen anderen Schallquellen könnte es vorkommen, dass die Schallmesseinheit nur noch den Schall dieser anderen Schallquellen erfassen und den Schall von aktiven Verbrauchern nicht mehr ausreichend auflösen kann.

Die Durchflussmesseinheit und/oder die Schallmesseinheit kann jeweils durch eine Ansteuerelektronik angesteuert werden. Diese Ansteuerelektronik kann jeweils eine Energieversorgung für das jeweilige Sensierelement bereitstellen und Sensorsignale aufbereiten. Dabei kann die Ansteuerelektronik die Sensorsignale verstärken, filtern (beispielsweise mit Hochpass, Tiefpass, Bandpass, Notch-Filter), analog-digital-wandeln und/oder auf sonstige Weise aufbereiten. Die Ansteuerelektronik kann dabei mit dem Sensierelement verbunden sein, basierend auf der auf das Sensierelement einwirkenden physikalischen Größe ein Sensorsignal erfassen und in eine für die physikalische Größe repräsentative Messgröße wandeln. Diese Messgröße kann analog oder digital ausgegeben werden. Der Aufbau der Ansteuerelektronik dürfte von dem Aufbau der jeweils angesteuerten Sensierelements und dessen Sensortechnologie abhängen.

Das System kann auf verschiedene Weisen implementiert sein. In einer Ausgestaltung ist das System vollständig durch Hardware implementiert. In einer anderen Ausgestaltung ist das System durch eine Kombination aus Hardware und Software implementiert. Die Hardware kann dabei Sensoren, Analog-Digital-Wandler, Filter (beispielsweise Hochpass-, Tiefpass-, Bandpass-, Notch-Filter), einen Prozessor (beispielsweise einen Mikrocontroller, digitalen Signalprozessor oder ASIC (Application Specific Integrated Circuit)) und/oder eine programmierbare Logikschaltung (beispielsweise einen FPGA (Field Programmable Gate Array) oder CPLD (Complex Programmable Logic Device)) umfassen. Ferner kann ein oder mehrere Speicher vorhanden sein, beispielsweise RAM (Random Access Memory), ROM (Read Only Memory) oder Flash-Speicher, auf den andere Hardware-Komponenten zugreifen können. Software kann die jeweiligen Komponenten des Systems steuern, beispielsweise den Prozessor oder Parameter eines Analog-Digital-Wandlers. Die Software kann dabei in einem der Speicher abgelegt und für die Abarbeitung aus dem Speicher geladen werden. Durch diesen Ansatz kann das System flexibel angepasst werden.

In einer Ausgestaltung umfasst die Durchflussmesseinheit einen Temperatursensor, wobei der Temperatursensor zum Anbringen an eine Leitung des Wasserleitungssystems, vorzugsweise einer Zufuhrleitung, und zum Erfassen einer Temperatur der Leitung ausgebildet ist. Auf diese Weise kann eine nicht-invasive, kostengünstige und zuverlässige Messung der Durchflussmenge erreicht werden. Dieser Ansatz basiert auf dem Umstand, dass eingespeistes Wasser meist kälter als eine Umgebung der Zufuhrleitung ist. Dadurch kühlt die Zufuhrleitung mit zunehmender Durchflussmenge stärker ab. Bei niedrigerem Durchfluss oder ohne Durchfluss wärmt die Umgebung die Zufuhrleitung auf, sodass insgesamt eine Korrelation zwischen Temperatur und Durchflussmenge besteht. Durch Messen der Temperatur kann die Durchflussmenge erstaunlich genau ermittelt werden. Ferner bietet diese Ausgestaltung noch einen weiteren Vorteil. Denn bei Absinken der Temperatur an der Zufuhrleitung unter einen Grenzwert besteht zunehmende Vereisungsgefahr, die wiederum die Gefahr einer Leckage erhöht. Dadurch kann das hier offenbarte System zudem als Vereisungswarner genutzt werden.

In einer Weiterbildung umfasst dieser Durchflussmesseinheit eine Wärmequelle, wobei durch die Wärmequelle ein definierter Wärmestrom abgebbar ist und wobei der Temperatursensor eine Auswirkung des Wärmestroms auf eine erfasste Temperatur erfasst. Auf diese Weise kann die Ist-Durchflussmenge noch genauer ermittelt werden. Denn fließendes Wasser führt die durch den Wärmestrom eingebrachte Wärme ab. Je mehr Wasser durch die Zufuhrleitung fließt desto mehr Wärme wird abgeführt, wodurch die durch den Temperatursensor erfasste Temperatur niedriger ausfällt. Je weniger Wärme durch Wasser abgeführt wird, desto höher wird die erfasste Temperatur sein. Dabei gibt die Wärmequelle vorzugsweise weniger als 20 Watt, besonders bevorzugter Weise weniger als 10 Watt, ganz besonders bevorzugter Weise weniger als 5 Watt an die Zufuhrleitung ab. Vorzugsweise ist die abgegebene Wärme größer als 1 Watt.

In einer noch weiteren Weiterbildung kann sowohl ein Temperatursensor vor der Wärmequelle als auch ein Temperatursensor nach der Wärmequelle angeordnet sein. Damit ermittelt der eine Temperatursensor die Temperatur des zugeführten Wassers und der andere Temperatursensor die durch die Wärmequelle erzeugte Temperaturerhöhung. Dadurch kann noch zuverlässiger ermittelt werden, welche Auswirkungen die Wärmequelle auf die Temperatur des Wassers in der Zufuhrleitung hat.

In einer Ausgestaltung ist Schallmesseinheit zum Erfassen von Körperschall ausgebildet und/oder umfasst ein piezo-basiertes oder ein MEMS-Mikrofon. Das Erfassen von Körperschall ermöglicht ein relativ verlustarmes Erfassen von Schall, da Körperschall sehr gut in Körperschallmikrofone übergekoppelt werden kann. Piezobasierte Körperschallmikrofone ermöglichen eine robuste und kostengünstige Schallmesseinheit. MEMS (Mikro-Elektro-Mechanisches-System)-Körperschallmikrofone erreichen eine hohe Sensitivität bei gleichzeitig hoher Miniaturisierbarkeit. Dadurch kann eine empfindliche und dennoch kompakte Schallmesseinheit entstehen.

In einer Ausgestaltung ist die Schallauswerteeinheit dazu ausgebildet, Schallmesswerte und/oder einen zeitlichen Verlauf von Schallmesswerten hinsichtlich eines Pegels, mehrerer Pegelwerte, einer Frequenz, eines konkreten Zeitverlaufs, einer Zeitdauer und/oder eines Spektrums zu analysieren. Das Analysieren von Schallmesswerten liefert unmittelbare Ergebnisse, ohne dass eine Zeitspanne abgewartet werden muss. Durch Analysieren des zeitlichen Verlaufs von Schallmesswerten kann der Schall vertiefend analysiert werden. So ist das Ermitteln eines Spektrums möglich. Ferner kann eine Veränderung des erfassten Schalls über die Zeit hinweg zuverlässig erkannt und eventuell auf das Bestehen eines Problems geschlossen werden. Denn die meisten Verbraucher sind lediglich für kurze Zeit aktiv; selbst sehr lange aktive Verbraucher, wie beispielsweise der Wasserhahn einer Badewanne oder ein Rasensprenger, sind nicht dauerhaft aktiv. Damit kann aus einer dauerhaft vorhandenen Schallkomponente auf ein Problem geschlossen werden, beispielsweise einen durchlaufenden Spülkasten oder eben eine Leckage. Entsprechend kann eine Analyse hinsichtlich eines konkreten Zeitverlaufs oder einer Zeitdauer hilfreich sein. Eine Analyse hinsichtlich eines Spektrums erlaubt das Isolieren konkreter aktiver Verbraucher. Eine Analyse hinsichtlich eines oder mehrere Pegel kann auf einfache Weise Erkenntnisse zu den aktiven Verbrauchern liefern, beispielsweise dass kein Verbraucher aktiv ist.

In einer Ausgestaltung umfasst die Schallauswerteeinheit einen Komparator, wobei der Komparator Schallmesswerte mit einem Schwellwert vergleicht und abhängig von einem Vergleichsergebnis aktive Verbraucher erkennt. Diese Ausgestaltung erlaubt eine besonders einfache Analyse. Auf diese Weise kann beispielsweise erkannt werden, wenn kein Verbraucher aktiv ist oder wenn besonders laute Verbraucher aktiv sind, wie beispielsweise Druckspüler.

In einer Ausgestaltung umfasst die Schallauswerteeinheit einen Frequenzanalysator, wobei der Frequenzanalysator zum Ermitteln eines Spektrums von Schallmesswerten ausgebildet ist. Auf diese Weise können die Schallmesswerte weiterreichend untersucht werden. Das Spektrum kann beispielsweise mittels einer FFT - Fast Fourier Transform - ermittelt werden. Sind lediglich einzelne Frequenzen von Interesse können auch andere Ansätze angewandt werden, wie beispielsweise der Goertzel-Algorithmus. Wie konkret ein Frequenzanalysator arbeitet, hängt von den jeweils zu gewinnenden Informationen, der verfügbaren Ressourcen und/oder weiteren Rahmenbedingungen ab und ist für die vorliegende Offenbarung nicht entscheidend.

In einer Ausgestaltung umfasst die Schallauswerteeinheit einen Klassifikator, wobei der Klassifikator zum Untersuchen von Schallmesswerten und/oder einem Spektrum von Schallmesswerten unter Verwendung mindestens einer Schallsignatur ausgebildet ist und wobei die mindestens eine Schallsignatur jeweils einen von einem aktiven Verbraucher ausgesendeten Schall charakterisiert. Auf diese Weise können detaillierte Informationen über aktive Verbraucher gewonnen werden. Wie bereits zuvor angeführt, gibt jeder Verbraucher bei Bezug von Wasser aus dem Wasserleitungssystem Schall ab, der von verschiedenen Rahmenbedingungen abhängt. Dieser für den jeweiligen Verbraucher spezifische Schall kann in einer Schallsignatur zusammengefasst werden. Eine Schallsignatur kann beispielsweise ein Spektrum eines konkreten aktiven Verbrauchers sein. Der Klassifikator kann die Schallmesswerte und/oder deren zeitlichen Verlauf mittels einer Korrelation, beispielsweise einer Kreuzkorrelation, untersuchen. Der Klassifikator kann aber auch ein neuronales Netzwerk oder andere im Bereich "Künstliche Intelligenz" angesiedelte Verfahren nutzen.

In einer Ausgestaltung umfasst das System zusätzlich einen Speicher, wobei in dem Speicher mehrere Schallsignaturen gespeichert sind, die jeweils einen von einem aktiven Verbraucher ausgesendeten Schall charakterisieren, und/oder wobei der Speicher zum Abspeichern von Schallmesswerten und/oder extrahierten Charakteristika von Schallmesswerten und/oder Ist-Durchflussmengen ausgebildet ist. Das Abspeichern von Schallsignaturen ermöglicht eine flexible Anpassung an geänderte Installationssituationen. Die Schallsignaturen können auf verschiedenste Weise abgespeichert sein. Sie können beispielsweise als Spektren vorliegen oder auch als Parameter eines neuronalen Netzwerks, das die Erkennung eines konkreten Verbrauchers vornehmen kann. Die Informationen in dem Speicher können bei Herstellung der Detektoreinheit in den Speicher abgelegt werden. Es ist aber auch denkbar, dass die Informationen während eines Parametriervorgangs aus einem externen Speicher geladen werden. Dieser externe Speicher kann beispielsweise in einem Cloud-System gebildet sein, das über eine Kommunikationsschnittstelle angebunden ist. Der externe Speicher kann auch in einem mobilen Endgerät gebildet oder über das mobile Endgerät erreichbar sein, das zur Parametrierung ausgebildet ist. Dieses mobile Endgerät kann beispielsweise ein Smartphone mit einer geeigneten App umfassen.

Das Abspeichern von früheren Schallmesswerten, Charakteristika, Ist-Durchflussmengen und/oder sonstiger Informationen, die während des Betriebs des Systems entstehen und "historische Werte" bilden, erlaubt eine gezielte Auswertung hinsichtlich Veränderungen. Die historische Werte können unterschiedlich abgespeichert sein. Dabei bietet es sich an, wenn zusätzlich zu den abgespeicherten Werten ein Zeitstempel abgespeichert wird, der eine zeitliche Einordnung der Werte erlaubt.

Der Speicher kann auf verschiedene Weise ausgebildet sein. Ein flüchtiger Speicher ist ebenso einsetzbar wie ein nichtflüchtiger Speicher. Lediglich beispielhaft sei auf RAM (Random Access Memory), MRAM (Magnetoresistive Random Access Memory), EEPROM (Electronically Erasable Read Only Memory) oder Flash-Speicher verwiesen. Bei Verwendung eines flüchtigen Speichers kann dessen Speicherinhalt über ein Pufferelement, beispielsweise einen Gold Cap (oder einen sonstigen Kondensator) oder einen Akkumulator, abgesichert sein.

In einer Ausgestaltung weist das System zusätzlich eine Signalisierungseinheit auf, wobei die Signalisierungseinheit bei Erkennen einer Leckage und/oder einer möglichen Leckage eine Warnmeldung erzeugt und aussendet. Die Signalisierungseinheit kann eine optische und/oder akustische Warnmeldung ausgeben, beispielsweise durch Ausgabe eines Blinklichts und/oder eines Alarmtons. Die Signalisierungseinheit kann auch - im Sinne des Internet of Things - eine Nachricht an eine Meldeeinheit oder eine Meldezentrale senden, die dann eine Warnung über andere Dienste, wie beispielsweise eine E-Mail, eine App, eine SMS, einen Instant-Message-Dienst oder dergleichen versendet. Auf diese Weise kann ein Nutzer flexibel über eine erkannte Leckage und/oder eine sehr wahrscheinlich vorhandene Leckage informiert werden. Die Warnmeldung kann auch von einem Wartungssystem empfangen werden, das eine Überprüfung der möglichen Leckage, beispielsweise durch einen Hausmeister, einen Installateur oder einen anderen Handwerker, anstößt.

In einer Ausgestaltung umfasst das System eine übergeordnete Steuereinheit, die Funktionen des Systems steuert und/oder überwacht, wobei die Steuereinheit dazu ausgebildet ist, das System in einen Anlernmodus zu versetzen, und wobei in dem Anlernmodus bisher noch nicht bekannte aktive Verbraucher an dem Wasserleitungssystem erkannt und/oder benannt werden können. Die Nutzung einer übergeordneten Steuereinheit erzeugt einen Mehrwert durch eine noch universellere Einsetzbarkeit und Steuerbarkeit des Systems. Ein Anlernmodus ermöglicht es, mit dem Wasserleitungssystem verbundene Verbraucher zu erkennen. In dem Anlernmodus kann beispielsweise gezielt ein Verbraucher nach dem anderen aktiviert und die jeweiligen Schallmesswerte und Ist-Durchflussmengen durch das System erfasst und analysiert werden. Dabei kann ein Benutzer ein mobiles Endgerät nutzen, das mit dem System über eine Kommunikationsschnittstelle verbunden ist und bei der Durchführung des Anlernvorgang unterstützt.

In einer Ausgestaltung weist das System zusätzlich eine vorzugsweise funkbasierte Kommunikationsschnittstelle auf, wobei die Kommunikationsschnittstelle zum Anbinden einer übergeordneten Steuereinheit, eines Cloudsystems, eines mobilen Endgeräts, einer Anzeigeeinheit und/oder einer Bedieneinheit ausgebildet sein kann und/oder wobei die Kommunikationsschnittstelle auf WLAN - Wireless Local Area Network -, NB-IoT - Narrow Band Internet of Things -, LTE-M - Long Term Evolution for Machines - und/oder LoRaWAN - Long Range Wide Area Network - basieren kann. Eine Kommunikationsschnittstelle ermöglicht eine flexible Kommunikation mit dem System, beispielsweise eine Ausgabe von Warnmeldungen und ein Überwachen des aktuellen Verbrauchs. WLAN ist eine Schnittstelle, die in vielen Gebäuden ohnehin bereitgestellt und universell nutzbar ist. NB-IoT ist eine Funktechnik, mit der Geräte des Internet of Things untereinander effizient Daten austauschen können, wobei eine hohe Gebäudedurchdringung, geringe Kosten und ein niedriger Energieverbrauch möglich ist. LTE-M ist eine Technologie, mit der höhere Datenraten und geringe Latenzzeiten realisierbar sind. LoRaWAN bietet eine hohe Reichweite bei gleichzeitig extrem niedrigem Energieverbrauch.

In einer Ausgestaltung basieren die Schallauswerteeinheit, die Schätzeinheit und/oder die Bewertungseinheit auf KI und umfassen vorzugsweise ein oder mehrere neuronale Netzwerke. Die Verwendung von künstlicher Intelligenz - KI - ermöglicht eine besonders leistungsfähige Analyse gewonnener Informationen. Insbesondere kann durch KI eine zuverlässige Klassifizierung von Schallmesswerten hinsichtlich aktiver Verbraucher durchgeführt werden. Darüber hinaus kann KI besonders effektiv eine Sensordatenfusion vornehmen, d.h. die Messdaten verschiedener Sensoren für eine gemeinsame Auswertung kombinieren. Verwendete neuronale Netzwerke können durch bekannte Verbraucher in einem bekannten Verbrauchszustand trainiert werden. Dieses Training kann während eines Anlernmodus durchgeführt und/oder verfeinert werden. Die Trainingsdatensätze können auch von den Herstellern von Verbrauchern geliefert oder in einem Labor durch einen Dienstleister oder den Hersteller des Systems bzw. der Detektoreinheit ermittelt und während einer Initialisierung des Systems in die neuronalen Netzwerke eingegeben werden.

In einer Ausgestaltung umfasst das System gemäß der vorliegenden Offenbarung eine Detektoreinheit, die Bestandteile des Systems implementiert, vorzugsweise die Schallauswerteeinheit, die Schätzeinheit und/oder Bewertungseinheit. Die Detektoreinheit kann zusätzlich die Durchflussmesseinheit oder die Schallmesseinheit oder Bestandteile davon umfassen oder mit diesen verbunden sein, beispielsweise über ein Kabel. Die Detektoreinheit kann zusätzlich eine Antenne aufweisen, über die eine Kommunikationsschnittstelle nach außen kommunizieren kann. Die Detektoreinheit kann eine Energieversorgung umfassen, die beispielsweise durch eine Batterie, einen Akkumulator oder ein Netzgerät gebildet sein kann. Die Detektoreinheit kann in einem Gehäuse angeordnet sein. Dieses Gehäuse kann über eine Haltevorrichtung verfügen, mit der das Gehäuse an die Zufuhrleitung eines Wasserleitungssystems angebracht werden kann. Insgesamt ermöglicht eine Detektoreinheit eine kompakte Implementierung wesentlicher Bestandteile des Systems, eine einfache Installation, auch durch Nicht-Fachpersonen, und/oder einen sicheren Betrieb des Systems.

In einer Ausgestaltung des Verfahrens wird auf eine Leckage geschlossen, wenn eine Ist-Durchflussmenge von einer geschätzten Durchflussmenge um einen vordefinierten Differenzwert abweicht. Auf diese Weise ist ein einfaches Mittel für eine Bewertung des Wasserleitungssystems gegeben.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Fig. 1: ein Blockschaltbild eines Ausführungsbeispiels eines Systems gemäß der vorliegenden Offenbarung,
- Fig. 2: eine vereinfachte Darstellung einer Installationssituation eines Systems gemäß Fig. 1 und
- Fig. 3: ein Ablaufdiagramm eines Ausführungsbeispiels eines Verfahrens gemäß der vorliegenden Offenbarung.

In den unterschiedlichen Figuren sind hinsichtlich ihrer Funktion gleichwertige Teile stets mit denselben Bezugszeichen versehen, so dass diese in der Regel auch nur einmal beschrieben werden.

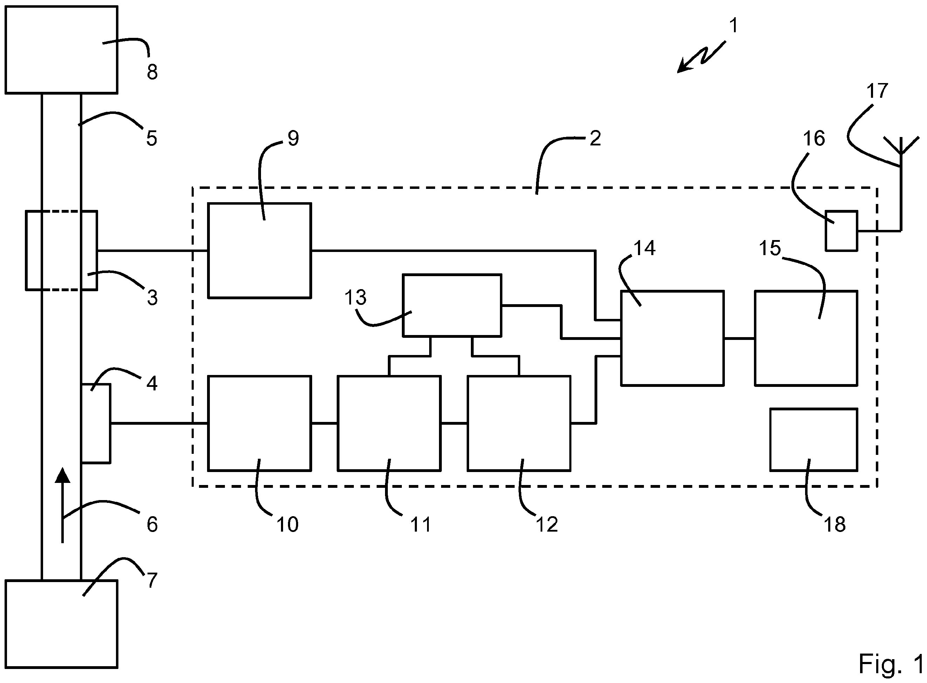

Fig. 1 zeigt ein Blockschaltbild eines Ausführungsbeispiels eines Systems gemäß der vorliegenden Offenbarung. Das System 1 umfasst eine Detektoreinheit 2, eine Durchflussmesseinheit 3 und eine Schallmesseinheit 4. Die Durchflussmesseinheit 3 und die Schallmesseinheit 4 sind an einer Zufuhrleitung 5 angeordnet, die in Fig. 1 schematisch angedeutet ist. Die Zufuhrleitung 5 fördert einen Durchfluss (durch einen Pfeil 6 angedeutet) von einer Wasserquelle 7 (beispielsweise ein öffentliches Trinkwassernetz, schematisch als Block angedeutet) zu einem Wasserleitungssystem 8 (ebenfalls schematisch als Block angedeutet). Dabei kann die Zufuhrleitung 5 auch als Bestandteil des Wasserleitungssystems 8 angesehen werden. Der Durchfluss 6 wird durch die Durchflussmesseinheit 3 als Ist-Durchflussmenge erfasst. Die Schallmesseinheit 4 erfasst Schall, der - unter anderem - durch mehrere aus dem Wasserleitungssystem 8 versorgte Verbraucher (nicht dargestellt) erzeugt und über das Wasserleitungssystem 8 einschließlich der Zufuhrleitung 5 zu der Schallmesseinheit 4 geleitet wird. Die Durchflussmesseinheit 3 gibt die erfasste Ist-Durchflussmenge in die Detektoreinheit 2 ein; die Schallmesseinheit 4 gibt erfasste Schallmesswerte an die Detektoreinheit 2 ein.

Die Detektoreinheit 2 umfasst eine Ansteuerelektronik 9 für die Durchflussmesseinheit 3, eine Ansteuerelektronik 10 für die Schallmesseinheit 4, eine Schallauswerteeinheit 11, eine Schätzeinheit 12, einen Speicher 13, eine Bewertungseinheit 14, eine Signalisierungseinheit 15 und eine Kommunikationsschnittstelle 16.

Die Ansteuerelektronik 9 steuert die Durchflussmesseinheit 3 an, versorgt diese mit Energie und wandelt die Sensorsignale in digitale Messwerte um. Entsprechendes leistet die Ansteuerelektronik 10 in Bezug auf die Schallmesseinheit 4. Dabei umfassen die Ansteuerelektroniken 9, 10 einen oder mehrere Verstärker, Filter, einen Analog-Digital-Wandler und sonstige Ansteuerelemente. Die Ansteuerelektronik 9 gibt einen Wert für die Ist-Durchflussmenge, der mittels der Durchflussmesseinheit 3 gewonnen worden ist, an die Bewertungseinheit 14 aus. Die Ansteuerelektronik 10 gibt einen Schallmesswert an die Schallauswerteeinheit 11 aus.

Die Schallauswerteeinheit 11 empfängt die Schallmesswerte und wertet diese aus. In der Schallauswerteeinheit 11 werden die Schallmesswerte zunächst dahingehend analysiert, ob ein Verbraucher aktiv ist. Hierzu können die Schallmesswerte, eventuell nach einer Mittelung über eine Zeitspanne hinweg zum Eliminieren von Impulsstörern, mit einem Schwellwert verglichen werden. Wenn die Schallmesswerte den Schwellwert nicht erreichen, ist mit hoher Wahrscheinlichkeit kein Verbraucher aktiv. Wenn die Schallmesswerte den Schwellwert übersteigen, kann auf das Vorhandensein mindestens eines aktiven Verbrauchers geschlossen werden.

Wenn mindestens ein aktiver Verbraucher erkannt worden ist, werden die Schallmesswerte einer FFT - Fast Fourier Transform - zugeführt, um spektrale Anteile der Schallmesswerte zu ermitteln. Für die Klassifikation aktiver Verbraucher umfasst die Schallauswerteeinheit 11 mindestens ein neuronales Netzwerk (nicht dargestellt). Dieses mindestens eine neuronale Netzwerk ist mit Schallmesswerten und/oder deren Spektren trainiert, die mit bekannten Verbrauchern in einem bekannten Verbrauchszustand erzeugt worden sind. Ferner kann dieses mindestens eine neuronale Netzwerk in einem Anlernmodus der Detektoreinheit 2 in der konkreten Installationssituation weiter trainiert worden sein, indem einzelne Verbraucher möglichst isoliert aktiviert und die bei der Schallmesseinheit 4 erfassten Schallmesswerte und dadurch extrahierbare Schallsignatur dem konkreten Verbraucher zugeordnet wurden. In dieses mindestens eine neuronale Netzwerk werden die Schallmesswerte und die Spektren, die durch die FFT ermittelt worden sind, eingegeben. Das mindestens eine neuronale Netzwerk klassifiziert aktive Verbraucher und gibt diese an die Schätzeinheit 12 aus. Die Ausgabe kann dabei die konkreten aktiven Verbraucher und die erkannten Verbrauchszustände umfassen.

Die Schallauswerteeinheit 11 kann auf den Speicher 13 zurückgreifen, in dem unter anderem Schallsignaturen der Verbraucher und/oder eine Repräsentation des mindestens einen neuronalen Netzwerks abgelegt sind.

Die Schätzeinheit 12 ermittelt basierend auf den erkannten aktiven Verbrauchern und den gegebenenfalls erkannten Verbrauchszuständen eine geschätzte Durchflussmenge. Dabei kann die Schätzeinheit 12 auf Inhalte in Speicher 13 zurückgreifen.

Die geschätzte Durchflussmenge wird in die Bewertungseinheit 14 eingegeben, die die geschätzte Durchflussmenge mit der Ist-Durchflussmenge vergleicht und bewertet. Stimmen die beiden Durchflussmengen miteinander überein bzw. weichen lediglich geringfügig voneinander ab, liegt keine Leckage vor. Weichen die beiden Durchflussmengen über ein vordefiniertes Mindestmaß voneinander ab, wird auf eine Leckage geschlossen und eine entsprechende Warnmeldung über die Signalisierungseinheit 15 ausgelöst. Diese Warnmeldung kann auch ein Maß für die Abweichung und damit ein Maß für Leckage und die Zuverlässigkeit der vorgenommenen Bewertung enthalten. Die Signalisierungseinheit 15 kann die Warnmeldung aufbereiten und über die Kommunikationsschnittstelle 16 ausgeben.

Die Kommunikationsschnittstelle 16 ist mit einer Antennen 17 verbunden, über die eine Verbindung zu einem WLAN-Access-Point (nicht dargestellt) herstellbar ist. Über diese Antenne kann die Warnmeldung an ein Cloud-System ausgegeben werden. Das Cloud-System kann schließlich einen Nutzer und/oder einen Systemüberwacher informieren, beispielsweise per E-Mail, SMS oder andere Nachrichtenkanäle.

Der Speicher 13 dient zudem als Protokollspeicher, in dem erfasste Ist-Durchflussmengen, erfasste Schallmesswerte, erkannte aktive Verbraucher und/oder weitere Zustände und Werte innerhalb der Detektoreinheit abgespeichert werden können. Jeder Wert wird zusammen mit einem Zeitstempel abgespeichert, der eine zeitliche Einordnung der Werte erlaubt. Die protokollierten Inhalte können beispielsweise in ein Cloud-System für eine Auswertung, beispielsweise hinsichtlich eines aktuellen und durchschnittlichen Wasserverbrauchs, oder über eine geeignete Schnittstelle (beispielsweise eine verschlüsselte Webseite) an ein mobiles Endgerät eines Nutzers (nicht dargestellt) ausgegeben werden.

Darüber hinaus umfasst die Detektoreinheit 2 eine Energieversorgung 18, die die Komponenten der Detektoreinheit 2, die Durchflussmesseinheit 3 und die Schallmesseinheit mit Energie versorgt. Die Energieversorgung 18 ist hier durch eine Batterie gebildet.

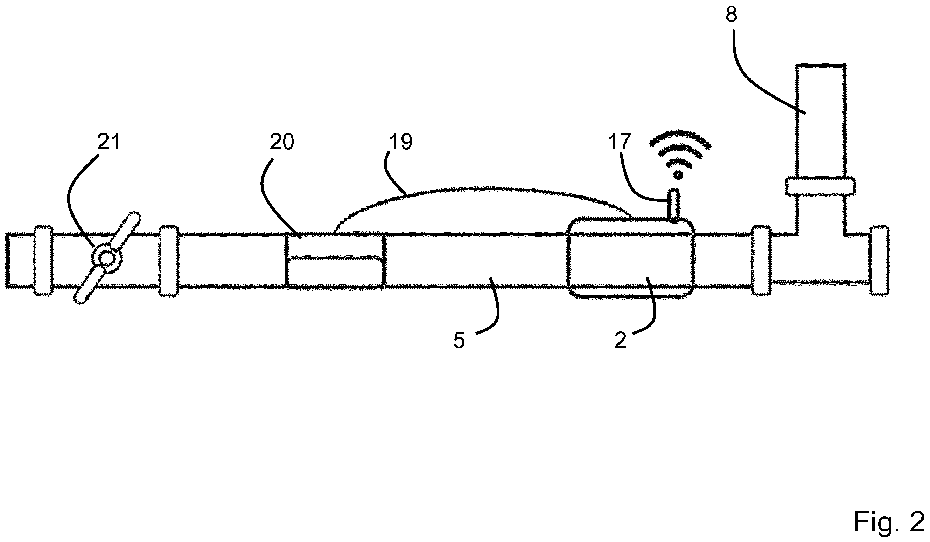

Fig. 2 zeigt eine Installationssituation eines Systems gemäß der vorliegenden Offenbarung. Eine Detektoreinheit 2 mit einer Antenne 17 ist an eine Zufuhrleitung 5 eines Wasserleitungssystems 8 angeklippt. Die Schallmesseinheit kann dabei in dem Gehäuse der Detektoreinheit integriert sein. Die Detektoreinheit 2 ist über ein Kabel 19 mit einer Wärmequelle 20 verbunden, die Bestandteil der Durchflussmesseinheit 3 ist und einen Wärmestrom an die Zufuhrleitung 5 abgibt. In der Installationssituation gemäß Fig. 2 ist zu erkennen, dass die Detektoreinheit 2 und damit die Schallmesseinheit in einigem Abstand von einem Absperrventil 21 angeordnet ist.

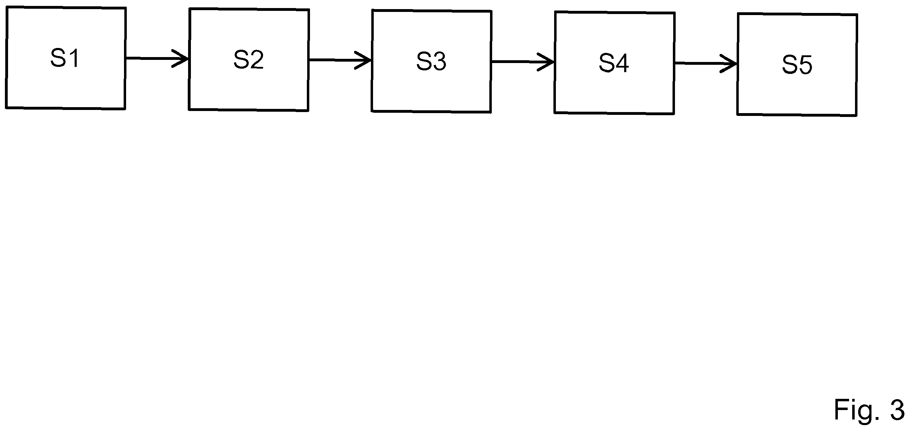

Fig. 3 zeigt ein Ablaufdiagramm eines Ausführungsbeispiels eines Verfahrens gemäß der vorliegenden Offenbarung. In Schritt S1 wird zunächst eine Ist-Durchflussmenge durch eine Zufuhrleitung des Wasserleitungssystems gemessen. In Schritt S2 wird Schall gemessen, der in dem Wasserleitungssystem bei einer Schallmesseinheit erfassbar ist. Dabei werden Schallmesswerte gewonnen, die für den Schall repräsentativ sind. Der Schall umfasst unter anderem Schall, der von aktiven Verbrauchern bei dem Bezug von Wasser aus dem Wasserleitungssystem erzeugt und in das Wasserleitungssystem gesandt wird. In Schritt S3 werden die Schallmesswerte ausgewertet, um aktive Verbraucher zu erkennen. In Schritt S4 wird eine geschätzte Durchflussmenge ermittelt, indem ein Verbrauch der erkannten aktiven Verbraucher geschätzt wird. In Schritt S5 wird die Ist-Durchflussmenge mit der geschätzten Durchflussmenge verglichen und bei Abweichen der Durchflussmengen über ein vordefinierten Differenzwert auf eine mögliche Leckage geschlossen. Bei Erkennen einer Leckage wird eine Warnmeldung erzeugt und versandt.

Hinsichtlich weiterer vorteilhafter Ausgestaltungen wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: System
- 2: Detektoreinheit
- 3: Durchflussmesseinheit
- 4: Schallmesseinheit
- 5: Zufuhrleitung
- 6: Durchfluss
- 7: Wasserquelle
- 8: Wasserleitungssystem
- 9: Ansteuerelektronik
- 10: Ansteuerelektronik
- 11: Schallauswerteeinheit
- 12: Schätzeinheit
- 13: Speicher
- 14: Bewertungseinheit
- 15: Signalisierungseinheit
- 16: Kommunikationsschnittstelle
- 17: Antenne
- 18: Energieversorgung
- 19: Kabel
- 20: Wärmequelle

## Patentansprüche

1. System zum Erkennen einer Leckage eines Wasserleitungssystems, insbesondere eines Wasserleitungssystems in einem Gebäude, wobei mehrere Verbraucher aus dem Wasserleitungssystem (8) mit Wasser versorgbar sind und wobei jeder der mehreren Verbraucher bei Bezug von Wasser aus dem Wasserleitungssystem (8) - aktiver Verbraucher - Schall in das Wasserleitungssystem (8) aussendet, umfassend:
eine Durchflussmesseinheit (3), die zum Anbringen an eine Zufuhrleitung (5) des Wasserleitungssystems (8) und zum Messen einer Ist-Durchflussmenge durch die Zufuhrleitung (5) ausgebildet ist,
eine Schallmesseinheit (4), die zum Messen von Schall in dem Wasserleitungssystems (8) und zum Ausgeben von Schallmesswerten basierend auf gemessenem Schall ausgebildet ist,
eine Schallauswerteeinheit (11), die zum Erkennen aktiver Verbraucher basierend auf den Schallmesswerten ausgebildet ist,
eine Schätzeinheit (12), die dazu ausgebildet ist, aus den durch die Schallauswerteeinheit (11) erkannten aktiven Verbraucher eine geschätzte Durchflussmenge zu ermitteln, und
eine Bewertungseinheit (14), die dazu ausgebildet ist, die Ist-Durchflussmenge mit der geschätzten Durchflussmenge zu vergleichen und basierend auf einem Vergleichsergebnis eine Leckage des Wasserleitungssystem (8) zu erkennen.

2. System nach Anspruch 1, **dadurch gekennzeichnet, dass** die Durchflussmesseinheit (3) einen Temperatursensor und eine Wärmequelle (20) umfasst, wobei der Temperatursensor zum Anbringen an eine Leitung (5) des Wasserleitungssystems (8) und zum Erfassen einer Temperatur der Leitung (5) ausgebildet ist, wobei durch die Wärmequelle (20) ein definierter Wärmestrom abgebbar ist und wobei der Temperatursensor eine Auswirkung des Wärmestroms auf eine erfasste Temperatur erfasst.

3. System nach Anspruch 1 oder 2, **dadurch gekennzeichnet, dass** Schallmesseinheit (4) zum Erfassen von Körperschall ausgebildet ist und/oder ein piezo-basiertes oder ein MEMS-Mikrofon umfasst.

4. System nach einem der Ansprüche 1 bis 3, **dadurch gekennzeichnet, dass** die Schallauswerteeinheit (11) dazu ausgebildet ist, Schallmesswerte und/oder einen zeitlichen Verlauf von Schallmesswerten hinsichtlich eines Pegels, mehrerer Pegelwerte, einer Frequenz, eines konkreten Zeitverlaufs, einer Zeitdauer und/oder eines Spektrums zu analysieren.

5. System nach einem der Ansprüche 1 bis 4, **dadurch gekennzeichnet, dass** die Schallauswerteeinheit (11) einen Komparator umfasst, wobei der Komparator Schallmesswerte mit einem Schwellwert vergleicht und abhängig von einem Vergleichsergebnis aktive Verbraucher erkennt.

6. System nach einem der Ansprüche 1 bis 5, **dadurch gekennzeichnet, dass** die Schallauswerteeinheit (11) einen Frequenzanalysator umfasst, wobei der Frequenzanalysator zum Ermitteln eines Spektrums von Schallmesswerten ausgebildet ist.

7. System nach einem der Ansprüche 1 bis 6, **dadurch gekennzeichnet, dass** die Schallauswerteeinheit (11) einen Klassifikator umfasst, wobei der Klassifikator zum Untersuchen von Schallmesswerten und/oder einem Spektrum von Schallmesswerten unter Verwendung mindestens einer Schallsignatur ausgebildet ist und wobei die mindestens eine Schallsignatur jeweils einen von einem aktiven Verbraucher ausgesendeten Schall charakterisiert.

8. System nach einem der Ansprüche 1 bis 7, das zusätzlich einen Speicher (13) umfasst, wobei in dem Speicher (13) mehrere Schallsignaturen gespeichert sind, die jeweils einen von einem aktiven Verbraucher ausgesendeten Schall charakterisieren, und/oder wobei der Speicher (13) zum Abspeichern von Schallmesswerten und/oder extrahierten Charakteristika von Schallmesswerten und/oder Ist-Durchflussmengen ausgebildet ist.

9. System nach einem der Ansprüche 1 bis 8, das zusätzlich eine Signalisierungseinheit (15) aufweist, wobei die Signalisierungseinheit (15) bei Erkennen einer Leckage und/oder einer möglichen Leckage eine Warnmeldung erzeugt und aussendet.

10. System nach einem der Ansprüche 1 bis 9, das eine übergeordnete Steuereinheit umfasst, die Funktionen des Systems (1) steuert und/oder überwacht, wobei die Steuereinheit dazu ausgebildet ist, das System in einen Anlernmodus zu versetzen, und wobei in dem Anlernmodus bisher noch nicht bekannte aktive Verbraucher an dem Wasserleitungssystem (8) erkannt und/oder benannt werden können.

11. System nach einem der Ansprüche 1 bis 10, das zusätzlich eine vorzugsweise funkbasierte Kommunikationsschnittstelle (16) aufweist, wobei die Kommunikationsschnittstelle zum Anbinden einer übergeordneten Steuereinheit, eines Cloudsystems, eines mobilen Endgeräts, einer Anzeigeeinheit und/oder einer Bedieneinheit ausgebildet sein kann und/oder wobei die Kommunikationsschnittstelle auf WLAN - Wireless Local Area Network -, NB-IoT - Narrow Band Internet of Things -, LTE-M - Long Term Evolution for Machines - und/oder LoRaWAN - Long Range Wide Area Network - basieren kann.

12. System nach einem der Ansprüche 1 bis 11, **dadurch gekennzeichnet, dass** die Schallauswerteeinheit (11), die Schätzeinheit (12) und/oder die Bewertungseinheit (14) auf KI basieren und vorzugsweise ein oder mehrere neuronale Netzwerke umfassen.

13. Verfahren zum Erkennen einer Leckage eines Wasserleitungssystems, insbesondere eines Wasserleitungssystems in einem Gebäude, vorzugsweise unter Nutzung eines Systems nach einem der Ansprüche 1 bis 12, wobei mehrere Verbraucher aus dem Wasserleitungssystem (8) mit Wasser versorgbar sind und wobei jeder der mehreren Verbraucher bei Bezug von Wasser - aktiver Verbraucher - Schall in das Wasserleitungssystem (8) aussendet, umfassend:
Messen (S1) einer Ist-Durchflussmenge durch eine Zufuhrleitung (5) des Wasserleitungssystems (8),
Messen (S2) von Schall in dem Wasserleitungssystem (8) zum Gewinnen von Schallmesswerten,
Auswerten (S3) von Schallmesswerten zum Erkennen aktiver Verbraucher,
Ermitteln (S4) einer geschätzten Durchflussmenge durch Schätzen eines Verbrauchs von erkannten aktiven Verbrauchern und
Vergleichen (S5) der Ist-Durchflussmenge mit der geschätzten Durchflussmenge zum Erkennen einer eventuell vorhandenen Leckage.

14. Verfahren nach Anspruch 13, **dadurch gekennzeichnet, dass** auf eine Leckage geschlossen wird, wenn eine Ist-Durchflussmenge von einer geschätzten Durchflussmenge um einen vordefinierten Differenzwert abweicht.

## Claims

1. A system for detecting a leakage of a water line system, in particular a water line system in a building, wherein multiple consumers can be supplied with water from the water line system (8) and wherein each of the multiple consumers, when drawing water from the water line system (8) - active consumer -, emits sound into the water line system (8), comprising:
a flow measuring unit (3) which is designed to be attached to a supply line (5) of the water line system (8) and to measure an actual flow rate through the supply line (5),
a sound measuring unit (4) which is designed to measure sound in the water line system (8) and to output measured sound values based on measured sound,
a sound evaluation unit (11) which is designed to detect active consumers based on the measured sound values,
an estimation unit (12) which is designed to determine an estimated flow rate from the active consumers detected by the sound evaluation unit (11), and
an assessment unit (14) which is designed to compare the actual flow rate with the estimated flow rate and to detect a leakage of the water line system (8) based on a comparison result.

2. The system according to claim 1, **characterized in that** the flow measuring unit (3) comprises a temperature sensor and a heat source (20), wherein the temperature sensor is designed to be attached to a line (5) of the water line system (8) and to record a temperature of the line (5), wherein a defined heat flow can be emitted by the heat source (20) and wherein the temperature sensor records an effect of the heat flow on a recorded temperature.

3. The system according to claim 1 or 2, **characterized in that** the sound measuring unit (4) is designed to record structure-borne sound and/or comprises a piezo-based microphone or a MEMS microphone.

4. The system according to any one of claims 1 to 3, **characterized in that** the sound evaluation unit (11) is designed to analyze measured sound values and/or a chronological sequence of measured sound values with regard to a level, multiple level values, a frequency, a specific timeline, a duration and/or a spectrum.

5. The system according to any one of claims 1 to 4, **characterized in that** the sound evaluation unit (11) comprises a comparator, wherein the comparator compares measured sound values with a threshold value and detects active consumers depending on a comparison result.

6. The system according to any one of claims 1 to 5, **characterized in that** the sound evaluation unit (11) comprises a frequency analyzer, wherein the frequency analyzer is designed to determine a spectrum of measured sound values.

7. The system according to any one of claims 1 to 6, **characterized in that** the sound evaluation unit (11) comprises a classifier, wherein the classifier is designed to examine measured sound values and/or a spectrum of measured sound values using at least one sound signature, and wherein the at least one sound signature characterizes in each case a sound emitted by an active consumer.

8. The system according to any one of claims 1 to 7, additionally comprising a memory (13), wherein multiple sound signatures, each characterizing a sound emitted by an active consumer, are stored in the memory (13), and/or wherein the memory (13) is designed to store measured sound values, and/or extracted characteristics of measured sound values, and/or actual flow rates.

9. The system according to any one of claims 1 to 8, additionally having a signaling unit (15), wherein the signaling unit (15) generates and transmits a warning message when a leakage and/or a possible leakage is detected.

10. The system according to any one of claims 1 to 9, comprising a higher-level control unit that controls and/or monitors the functions of the system (1), wherein the control unit is designed to put the system into a teach-in mode and wherein, in the teach-in mode, previously unknown active consumers in the water line system (8) can be detected and/or named.

11. The system according to any one of claims 1 to 10, additionally having a preferably radio-based communication interface (16), wherein the communication interface can be designed for connecting a higher-level control unit, a cloud system, a mobile device, a display unit, and/or an operating unit, and/or wherein the communication interface can be based on WLAN - Wireless Local Area Network -, NB-IoT - Narrow Band Internet of Things -, LTE-M - Long Term Evolution for Machines - and/or LoRaWAN - Long Range Wide Area Network.

12. The system according to any one of claims 1 to 11, **characterized in that** the sound evaluation unit (11), the estimation unit (12), and/or the assessment unit (14) are based on AI and preferably comprise one or more neural networks.

13. A method for detecting a leakage of a water line system, in particular a water line system in a building, preferably using a system according to any one of claims 1 to 12, wherein multiple consumers can be supplied with water from the water line system (8) and wherein each of the multiple consumers, when drawing water - active consumer -, emits sound into the water line system (8), comprising:
measuring (S1) an actual flow rate through a supply line (5) of the water line system (8),
measuring (S2) sound in the water line system (8) to obtain measured sound values,
evaluating (S3) measured sound values to detect active consumers,
determining (S4) an estimated flow rate by estimating a consumption of detected active consumers, and
comparing (S5) the actual flow rate with the estimated flow rate to detect a possibly existing leakage.

14. The method according to claim 13, **characterized in that** a leakage is inferred if an actual flow rate deviates from an estimated flow rate by a predefined difference value.

## Revendications

1. Système d'identification d'une fuite d'un système de conduites d'eau, en particulier d'un système de conduites d'eau dans un bâtiment, sachant que plusieurs consommateurs peuvent être alimentés en eau à partir du système de conduites d'eau (8) et sachant que chacun des consommateurs multiples émet un son « consommateur actif » dans le système de conduites d'eau (8) lors de l'approvisionnement en eau à partir du système de conduites d'eau (8), comprenant :
une unité de mesure de débit (3), qui est constituée pour le montage sur une conduite d'alimentation (5) du système de conduites d'eau (8) et pour mesurer une quantité de débit réelle à travers la conduite d'alimentation (5),
une unité de mesure de son (4), qui est constituée pour mesurer le son dans le système de conduites d'eau (8) et pour délivrer des valeurs de mesure de son en se basant sur le son mesuré,
une unité d'évaluation de son (11), qui est constituée pour identifier des consommateurs actifs en se basant sur les valeurs de mesure de son,
une unité d'estimation (12), qui est constituée pour déterminer une quantité de débit estimée à partir des consommateurs actifs identifiés par l' unité d'évaluation du son (11), et
une unité de valorisation (14), qui est constituée pour comparer la quantité de débit réelle à la quantité de débit estimée et identifier une fuite du système de conduites d'eau (8) en se basant sur un résultat de comparaison.

2. Système selon la revendication 1, **caractérisé en ce que** l'unité de mesure du débit (3) comprend un capteur de température et une source de chaleur (20), sachant que le capteur de température est constitué pour le montage sur une conduite (5) du système de conduites d'eau (8) et pour la saisie d'une température de la conduite (5), sachant qu'un flux thermique défini peut être délivré par la source de chaleur (20) et sachant que le capteur de température saisit une incidence du flux thermique sur une température saisie.

3. Système selon la revendication 1 ou 2, **caractérisé en ce que** l'unité de mesure du son (4) est constituée pour la saisie d'un bruit de structure et/ou comprend un microphone à base piézoélectrique ou micro-électro-mécanique.

4. Système selon l'une quelconque des revendications 1 à 3, sachant que l'unité d'évaluation du son (11) est constituée pour analyser des valeurs de mesure de son et/ou un profil temporel de valeurs de mesure de son eu égard à un niveau, à plusieurs valeurs de niveau, à une fréquence, à un profil de temps concret, à une durée et/ou à un spectre.

5. Système selon l'une quelconque des revendications 1 à 4, **caractérisé en ce que** l'unité d'évaluation du son (11) comprend un comparateur, sachant que le comparateur compare des valeurs de mesure du son à une valeur seuil et identifie les consommateurs actifs en fonction d'un résultat de comparaison.

6. Système selon l'une quelconque des revendications 1 à 5, **caractérisé en ce que** l'unité d'évaluation du son (11) comprend un analyseur de fréquences, sachant que l'analyseur de fréquences est constitué pour déterminer un spectre de valeurs de mesure du son.

7. Système selon l'une quelconque des revendications 1 à 6, **caractérisé en ce que** l'unité d'évaluation de son (11) comprend un classificateur, sachant que le classificateur est constitué pour analyser des valeurs de mesure du son et/ou un spectre de valeurs de mesure du son en utilisant au moins une signature acoustique et sachant qu'au moins une signature acoustique caractérise respectivement un son émis par un consommateur actif.

8. Système selon l'une quelconque des revendications 1 à 7, qui comprend en plus une mémoire (13), sachant que plusieurs signatures acoustiques sont mémorisées dans la mémoire (13), qui caractérisent respectivement un son émis par un consommateur actif et/ou sachant que la mémoire (13) est constituée pour mémoriser des valeurs de mesure du son et/ou des caractéristiques extraites de valeurs de mesure du son et/ou des quantités de débit réelles.

9. Système selon l'une quelconque des revendications 1 à 8, qui comporte en plus une unité de signalisation (15), sachant que l'unité de signalisation (15) produit un message d'avertissement lors de l'identification d'une fuite et/ou d'une fuite possible.

10. Système selon l'une quelconque des revendications 1 à 9, qui comprend une unité de pilotage prioritaire, qui commande et/ou contrôle les fonctions du système (1), sachant que l'unité de pilotage est constituée pour faire basculer le système dans un mode d'apprentissage et sachant que dans le mode d'apprentissage les consommateurs actifs pas encore connus jusqu'ici peuvent être identifiés et/ou désignés sur le système de conduites d'eau (8).

11. Système selon l'une quelconque des revendications 1 à 10, qui comporte en plus une interface de communication (16) de préférence à base radio, sachant que l'interface de communication peut être constituée pour raccordement d'une unité de pilotage prioritaire, d'un système type Cloud, d'un terminal mobile, d'une unité d'affichage et/ou d'une unité de commande et/ou sachant que l'interface de communication peut être basée sur un réseau local sans fil (WLAN), un réseau Internet à bande étroite d'objets connectés (Narrow Band Internet of Things, NB-IoT), une évolution à long terme pour des machines (LTE-M), et/ou un réseau à zone élargie à longue portée (Long Range Wide Area Network, LoRaWAN).

12. Système selon l'une quelconque des revendications 1 à 11, **caractérisé en ce que** l'unité de mesure d'évaluation du son (11), l'unité d'estimation (12) et/ou l'unité de valorisation (14) sont basées sur l'intelligence artificielle (IA) et comprennent de préférence un ou plusieurs réseaux neuronaux.

13. Procédé d'identification d'une fuite d'un système de conduites d'eau, en particulier d'un système de conduites d'eau dans un bâtiment, de préférence en utilisant un système selon l'une quelconque des revendications 1 à 12, sachant que plusieurs consommateurs peuvent être alimentés en eau à partir du système de conduites d'eau (8) et sachant que chacun des consommateurs multiples émet un son « consommateur actif » dans le système de conduites d'eau (8), lors de l'approvisionnement en eau, comprenant :
la mesure (S1) d'une quantité de débit réelle à travers une conduite d'alimentation (5) du système de conduites d'eau (8),
la mesure (S2) de son dans le système de conduites d'eau (8) pour obtenir des valeurs de mesure de son,
l'évaluation (S3) des valeurs de mesure de son pour identifier les consommateurs actifs,
la détermination (S4) d'une quantité de débit estimée par estimation d'une consommation des consommateurs actifs identifiés, et
la comparaison (S5) de la quantité de débit réelle à la quantité de débit estimée pour identifier une fuite éventuellement présente.

14. Procédé selon la revendication 13, **caractérisé en ce que** l'on conclut d'après une fuite, si une quantité de débit réelle s'écarte d'une valeur différentielle prédéfinie d'une quantité de débit estimée.
